Europäisches Patentamt

European Patent Office

Office européen des brevets

(19)

(11) Veröffentlichungsnummer : **0 128 348**
**B1**

(12) # EUROPÄISCHE PATENTSCHRIFT

(45) Veröffentlichungstag der Patentschrift :
09.09.87

(51) Int. Cl.⁴ : **G 03 B 27/73**

(21) Anmeldenummer : **84105131.1**

(22) Anmeldetag : **07.05.84**

(54) Verfahren und Vorrichtung zum Bestimmen der Kopierlichtmengen in den verschiedenen Farben beim Farbkopieren.

(30) Priorität : 17.05.83 DE 3317804

(43) Veröffentlichungstag der Anmeldung :
19.12.84 Patentblatt 84/51

(45) Bekanntmachung des Hinweises auf die Patenterteilung : 09.09.87 Patentblatt 87/37

(84) Benannte Vertragsstaaten :
CH DE GB IT LI

(56) Entgegenhaltungen :
CH-A- 397 423
DE-A- 2 118 617
DE-A- 2 535 034
DE-A- 2 535 772
DE-A- 2 912 130
DE-B- 1 914 360
Patent Abstracts of Japan vol. 2, no. 99, 17 August 1978 Seite 4909E78
R.W.G. Hunt: The reproduction of colour, Seiten 284, 285

(73) Patentinhaber : Agfa-Gevaert AG
Patentabteilung
D-5090 Leverkusen 1 (DE)

(72) Erfinder : Fürsich, Manfred, Dr.
Hainbuchenstrasse 53
D-8028 Taufkirchen (DE)
Erfinder : Findeis, Günter, Dipl.-Phys.
Wallbergstrasse 18d
D-8029 Sauerlach (DE)
Erfinder : Treiber, Helmut, Dr.
Bertelestrasse 67
D-8000 München 71 (DE)
Erfinder : Fergg, Berthold, Dr.
Enzianring 3
D-8028 Taufkirchen (DE)
Erfinder : Thurm, Siegfried, Dr.
Am Damm 5a
D-4005 Meerbusch 3 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum Bestimmen der Kopierlichtmengen in den verschiedenen Farben beim Farbkopieren mit Meßeinrichtungen für die Durchlässigkeit der Kopiervorlagen, wobei die spektrale Empfindlichkeit der Meßeinrichtung in jeder Farbe genau der des Kopiermaterials entspricht.

Die Forderung, daß die spektrale Empfindlichkeit der Meßeinrichtung genau der des Kopiermaterials entsprechen soll, ist seit langem bekannt (s. z. B. DE-A 21 18 617). Hintergrund dieser Forderung ist die Überlegung, daß bei einem Auseinanderfallen der spektralen Empfindlichkeit von Meßsystem und Kopiermaterial ein Anstieg der Dichte in einer Farbe im Negativ nicht zu einer entsprechenden Änderung in der Kopierlichtmenge führen würde und so eine Farbverfälschung eintreten könnte. In der Literatur (RWG Hunt « The Reproduction of Colour » S. 284) ist jedoch auch bereits darauf hingewiesen, daß diese Übereinstimmung zwischen Empfindlichkeit der Meßeinrichtung und des Kopiermaterials wegen der sehr steilen Flanken auf der Seite der langen Wellenlängen nur sehr schwer zu erreichen sei. Anhand eines Beispiels wird dort ausgeführt, daß bei einer Messung etwas außerhalb des Dichtemaximums eines Negativfarbstoffs die Dichten zu gering eingeschätzt werden und somit eine Unterkorrektur stattfindet. Für viele Fotolabors war eine solche Unterkorrektur nicht unerwünscht, da sie ohne gezielte Eingabe von Farbkorrekturen pro Vorlage Farbstiche, aber auch Farbdominanten reduziert. Die aus theoretischen Gründen als richtig angesehene Übereinstimmung der Empfindlichkeitskurven von Papier und Meßeinrichtung erschien deshalb als nicht realisierbar und nicht notwendig. Diese Literaturstelle gibt keinen Hinweis, daß diese Übereinstimmung ein Beitrag zum Erreichen des Ziels der gemischten Produktion sein könnte. Die DE-A-2 912 130 beschreibt eine Vorrichtung mit einem Rechner für das Auswerten der Meßwerte von Bereichen einer größeren Anzahl von Vorlagen eines Filmes oder von ausgewählten, für diesen Film kennzeichnenden Bereichen, der einen für diesen Film kennzeichnenden Datensatz liefert. Dieser Rechner bemißt aufgrund des Datensatzes und der Meßwerte der zu kopierenden Vorlage die Kopierlichtmengen in den drei Farben so, daß aufgrund des Datensatzes als farblich neutral anzusehende Vorlagenbereiche annähernd neutral grau kopiert werden. Dieser Rechner benötigt jedoch hierfür von der Filmsorte abhängige Erfahrungswerte, so daß eine gemischte Verarbeitung verschiedener Filmsorten ohne Umschalten von Speichern nicht möglich erscheint.

Bei der Betrachtungsweise mit Über- und Unterkorrektur wird ausgegangen von einer Eichung des Kopiergerätes aufgrund eines Eichnegativs einer bestimmten Filmsorte, die für dieses Eichnegativ eine optimale Kopie ergibt. Durch prozentuale Veränderungen der für das Eichnegativ richtigen Kopierlichtmengen werden dann für andere Negative derselben Filmsorte die dafür richtigen Kopierlichtmengen aufgrund der Dichteunterschiede dieser Negative zum Eichnegativ festgelegt. Um diese Rechenprozedur durchführen zu können, müssen im Kopiergerät jeweils die Eichwerte eingegeben werden, die zu der zum Kopieren anstehenden Filmsorte als optimal ermittelt wurden. Diese Eingabe der Filmsorte erfordert großen organisatorischen Aufwand bei der Vorbereitung der Aufträge oder bei Einzeleingabe von Hand jeweils am Filmanfang einen hohen personellen Aufwand.

Ursache der unterschiedlichen Eichwerte für die verschiedenen Filmsorten sind vor allem die Dichten der Masken und Farbstoffe der Negativfilme, die von Fabrikat zu Fabrikat unterschiedlich sein können.

Es gibt zwar die Neutralgraukompensation, die von jedem beliebigen Negativ durch Steuerung der Kopierlichtmengen aufgrund der gemessenen Einzelfarbdichten eine im Mittel neutral graue Kopie herzustellen gestattet. Die generelle Anwendung dieser Maßnahme beim automatischen Steuern der Farbbelichtungen führt bei in dem Aufnahmemotiv begründeten, intensiv gefärbten Flächen, sogenannten Farbdominanten, zu einer Farbverschiebung der Kopie. Das Problem ist deshalb, durch Masken des Films oder Farbstiche hervorgerufene Übergewichte einzelner Farben im Negativ zu unterscheiden von den Farbdominanten.

Aufgabe der Erfindung ist es, eine Vorrichtung der eingangs genannten Art zu schaffen, mit der ohne Gefahr von Farbverfälschungen bei Farbdominanten auf die Eingabe der Kennwerte für die jeweilige Filmsorte (Filmfabrikat) verzichtet werden kann.

Diese Aufgabe wird gelöst durch die im Anspruch 1 beschriebene Vorrichtung. In der erfindungsgemäßen Vorrichtung werden durch bereichsweises Abtasten einer größeren Anzahl von Vorlagen desselben Filmes unabhängig von dem jeweiligen Filmtyp für diesen bestimmten Film Parameter ermittelt, die eindeutig zeigen, welche Bereiche der zu kopierenden Vorlage im wesentlichen farbneutral sind. Für die Ermittlung der optimalen Kopierbelichtung werden dann die Meßwerte der als farbneutral beurteilten Bereiche herangezogen. Verfahren zur Unterscheidung von Farbdominanten von Farbstichen sind z. B. in der DE-A-25 35 034 und in der gleichzeitig eingereichten europäischen Patentanmeldung 84105132.9 = 0 128 349 Al der Anmelderin offenbart.

Mit dem Ausgleich des Farbgangs der Meßzellen durch die entsprechende Bemessung der spektralen Durchlässigkeit der Meßfilter in Anpassung an die spektrale Empfindlichkeit des Kopiermaterials ist genau sichergestellt, daß die Meßeinrichtung die Farbdurchlässigkeit der Kopiervorlage in gleicher Weise aufnimmt wie das Kopiermaterial. Zusammen mit der Bemessung der Kopierlichtmenge derart, daß die Farbneutralen Vorlagenbereiche auch neutral grau in der Kopie wiedergegeben werden, wird damit eine Belichtungssteuerung möglich, die unabhängig von eventuellen Farbstichen, unterschiedlichen Filmfarbstoffen oder verschieden dichten Masken der Negativfilme ohne Eingabe des Filmtyps und der damit verbundenen Kennwerte in das Kopiergerät zu farbrichtigen Kopien führt.

Nach einer Ausgestaltung der Erfindung werden bei getrenntem Meß- und Kopierstrahlengang die Unterschiede in den Spektren der Kopierlampe und der Meßlampe sowie die spektralen Unterschiede in der Durchlässigkeit des Kopierstrahlengangs gegenüber dem Meßstrahlengang bei der Bestimmung der Durchlässigkeit der Meßfilter berücksichtigt. Durch diese Maßnahme wird sichergestellt, daß auch bei getrenntem Meß- und Kopierstrahlengang mit zwischenzeitlicher Datenspeicherung die Meßeinrichtung und das Kopiermaterial das von dem Negativ ausgehende Licht unter gleichen Bedingungen aufnehmen.

Weitere Einzelheiten und Vorteile der erfindungsgemäßen Vorrichtung ergeben sich aus den Unteransprüchen im Zusammenhang mit der Beschreibung eines Ausführungsbeispiels, das im folgenden anhand von Figuren erläutert ist. Es zeigen :

Figur 1 den prinzipiellen Aufbau eines Kopiergerätes mit einer erfindungsgemäßen Vorrichtung zum Bestimmen der Kopierlichtmengen,

Figur 2 eine Einzelheit des Lichtwertgebers gemäß Fig. 1 in der Seitenansicht,

Figur 3 die Einzelheiten des Lichtwertgebers gemäß Fig. 2 im Grundriß,

Figur 4 einen Filmabschnitt mit Kopiervorlagen,

Figur 5 die relative Transmission der Meßfilter im blauen Meßstrahlengang im Verhältnis zur Blauempfindlichkeit eines bestimmten Kopiermaterials,

Figur 6 Durchlässigkeit der Meßfilter und Empfindlichkeit des Kopierpapiers im Grünbereich und

Figur 7 die Durchlässigkeit der Meßfilter und Empfindlichkeit des Kopierpapiers im roten Bereich.

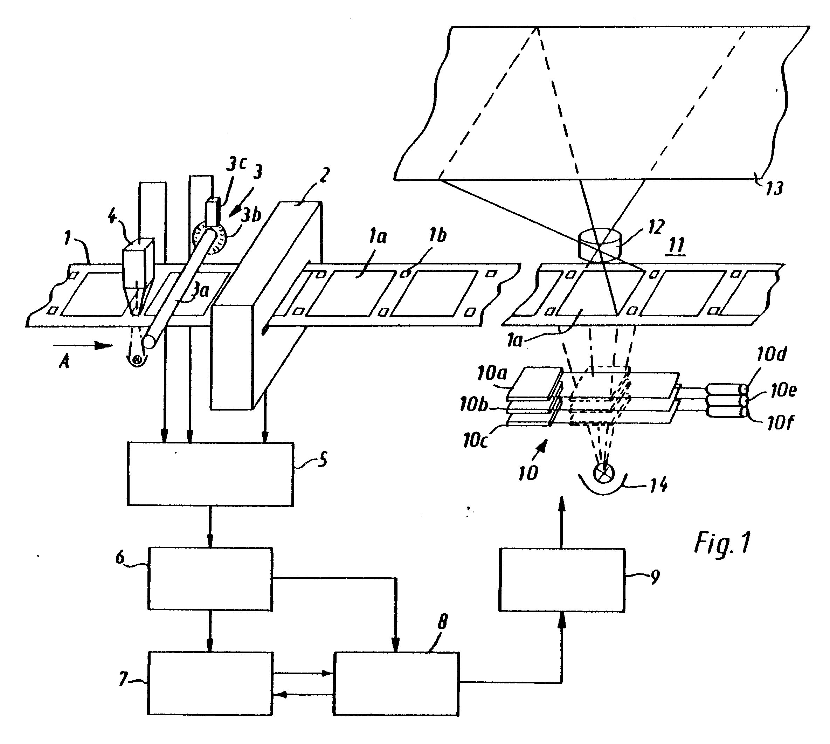

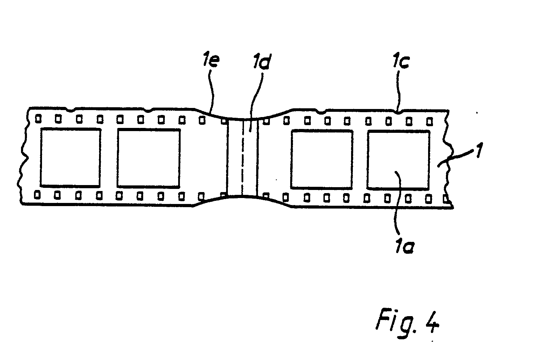

In Fig. 1 ist mit 1 ein belichteter und entwickelter Film bezeichnet, der verschiedene negative Kopiervorlagen 1a enthält. Jeweils in Zuordnung zu den Kopiervorlagen sind abtastbare Marken 1b angebracht. Diese können z. B. Perforationslöcher sein in Übereinstimmung mit den Kopiervorlagen bei den Filmformaten 126 und 110 oder bei 135-Filmen gemäß Fig. 4 nachträglich in Zuordnung zu den belichteten und entwickelten Kopiervorlagen angebrachte Randkerben 1c.

Am Filmweg mit Laufrichtung entsprechend dem Pfeil A angeordnet ist eine erste Abtastvorrichtung 4, z. B. in Form einer Lichtschranke, die die Marken 1b abtastet und die Signale über vorbeilaufende Marken 1b an einen Meßumformer 5 weiterleitet. Am weiteren Filmweg ist angeordnet ein Längengeber 3, der eine vom Film angetriebene Walze 3a und eine mit dieser verbundene Scheibe 3b enthält. Die Scheibe weist an ihrem äußeren Rand radial verlaufende, in gleichmäßigen Abständen angeordnete Schlitze auf, deren Vorbeilaufen durch eine Lichtschranke 3c in filmlängenabhängige Impulse umgesetzt wird. Die Lichtschranke 3c ist ebenfalls an den Meßumformer 5 angeschlossen.

Das nächstfolgende Aggregat längs des Filmweges ist ein Lichtwertgeber 2, der drei quer über die Filmlaufbahn sich erstreckende Zeilen von Fotoempfängern 25, 28 und 31, z. B. Fototransistoren oder Fotodioden enthält, von denen jeder etwa 1/10 der durchlaufenden Negativbreite abtastet. Die Fotoempfänger sind für je eine der Grundfarben sensibilisiert, so daß sie jeweils ein Signal für die Transparenz in jeder der drei Grundfarben für jeden Meßbereich oder Meßpunkt abgeben. Dazu können drei Zeilen 25, 28 und 31 von Fotoempfängern in Richtung des Pfeiles A dicht hintereinander liegen oder es wird das durchtretende Licht von einem einheitlichen Abtastbereich über teildurchlässige Spiegel und/oder Filter den jeweiligen Reihen von Fotoempfängern zugeführt. Auf diese Weise kann der Lichtwertgeber 2 an den Meßumformer 5 zu jedem Teilbereich der Vorlage die drei Farbtransparenzwerte weitergeben, die im Umformer in Dichtewerte umgesetzt werden. Durch die Koordination über den Längengeber 3 werden die dreißig Meßwerte (zehn pro Farbe) einer Zeile jeweils so abgerufen, daß nach z. B. vierzehn Messungen bei Kleinbild eine gesamte Vorlage erfaßt ist. Der Abtaster 4 steuert dabei die Zuordnung jeweils zu einer bestimmten Vorlage 1a.

An den Meßumformer 5 ist ein Eingabeinterface 6 angeschlossen, das die von dem Lichtwertgeber gelieferten Dichtewerte sowohl an einen Speicher 7 als auch an einen Rechner 8 weitergibt, die miteinander verbunden sind. Der Rechner 8 kann z. B. ein Microprozessor der Firma Digital Equipment Corp. mit der Bezeichnung LSI 11/23 sein. Der Rechner holt sich dabei aus dem Speicher 7 jeweils die Daten, die er für die einzelnen Schritte des nachfolgend beschriebenen Rechenverfahrens benötigt.

An den Rechner 8 ist ein Ausgabeinterface 9 angeschlossen, das Steuerimpulse an eine Gruppe von Belichtungsfilteraggregaten 10 einer Kopierstation 11 gibt. In dieser Kopierstation, die um eine vorgegebene Filmlänge gegenüber der Abtaststation 2 versetzt ist, wird die jeweils in Kopierstellung befindliche Vorlage 1a durch ein Objektiv 12 auf einem Streifen 13 von Farbkopiermaterial abgebildet. Zwischen der Lichtquelle 14 und der Kopiervorlage 1a befinden sich die Führungseinrichtungen und Antriebsaggregate für die Kopierfilter 10a, 10b und 10c, die bei ihrem Einführen in den Kopierlichtstrahlengang jeweils die Belichtung in der betreffenden Grundfarbe beenden. Als Antriebsaggregate für die Filter sind in bekannter Weise Elektromagnete 10d, 10e und 10f vorgesehen. Die in Fig. 1 gezeigte Anordnung der Farbfilter 10a, b, c mit den zugehörigen Magneten steuert die Kopierlichtmenge in den einzelnen Farben durch unterschiedlich lange Belichtungszeiten. Die Steuerung der Kopierlichtmengen in den Farben kann auch durch eine Intensitätssteuerung erfolgen, bei der subtraktiv wirkende Farbfilter mehr oder weniger weit in den Strahlengang geschoben werden und diesen entsprechend den vom Rechner vorgegebenen Werten anfärben. Die Belichtungszeit in den drei Farben ist dann gleich lang, wird vom Rechner vorgegeben und durch einen Verschluß mit einem Antrieb nach Art der Filterantriebe beendet.

Der in Fig. 1 dargestellte Filmstreifen 1 erscheint von einheitlicher Art und Länge. Die Filmstreifen sind jedoch immer aus einer größeren Anzahl einzelner Filme zusammengestellt, die durch Klebestellen miteinander verbunden sind. Gemäß Fig. 4, die einen Filmstreifen 1 der Konfektionierungsart 135 (Kleinbild) zeigt, sind neben den den einzelnen Bildfeldern 1a zugeordneten Randkerben 1c an der Klebestelle 1d beidseitig bogenförmige Ausstanzungen 1e angeordnet, die den Wechsel von einem Film zum nächsten maschinenmäßig erfaßbar machen. Als Signalgeber für eine Klebestelle könnte auch eine Infrarotabtastung vorgesehen sein, nachdem Klebestreifen in der Regel infrarotundurchlässig sind.

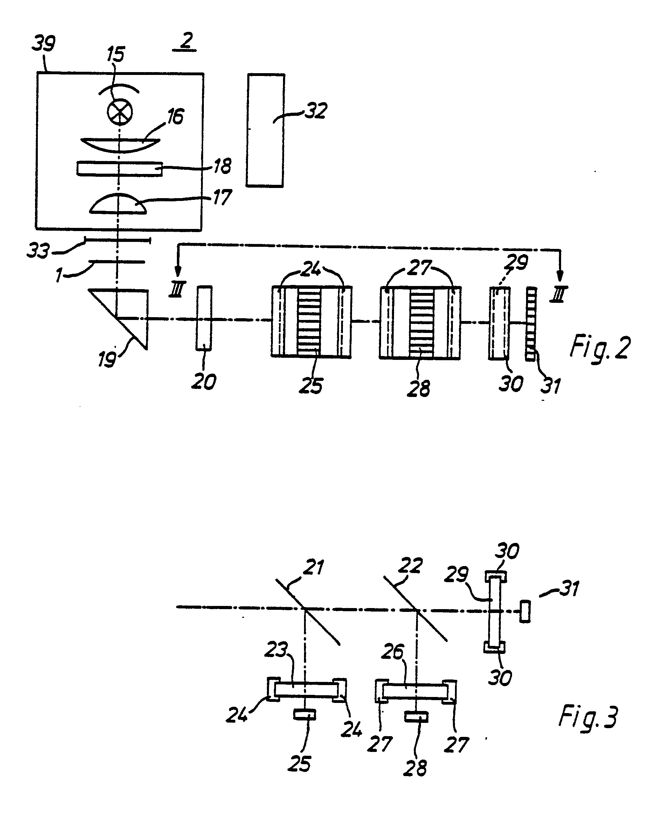

Der Lichtwertgeber 2 gemäß Fig. 1 ist in den Fig. 2 und 3 im einzelnen dargestellt. In einem Gehäuseteil 39 oberhalb der Bahn des Films 1 ist eine Halogenlampe 15 angeordnet, deren Licht etwa die gleiche spektrale Verteilung wie das der Kopierlampe 14 aufweist. Die Lampe 15 wird durch ein Gebläse 32 gekühlt. In Strahlrichtung hinter der Lampe befindet sich noch ein Reflektor, während vor der Lampe zwei Kondensorlinsen 16, 17 angeordnet sind. Zwischen diesen Linsen liegt ein Wärmeschutzfilter 18. Der aus dem Gehäuse 32 austretende Lichtstrahl erhält durch eine Spaltblende 33 die Form eines schmalen Lichtbandes, das sich quer über die Breite des Films 1 erstreckt. Das durch den Film hindurchgetretene Licht trifft auf ein Umlenkprisma 19, durchtritt ein weiteres Wärmeschutzfilter 20 und trifft auf einen unter 45° zum Strahlengang geneigten Blauspiegel 21, der gleichzeitig als Gelbfilter wirkt. Der blaue Anteil des Lichtes wird um 90° umgelenkt auf ein Blaufilter 23, das in einer Schiebeführung 24 auswechselbar eingesetzt ist. Hinter dem Blaufilter 23 liegt eine Meßzellenzeile 25 mit solcher Orientierung, daß der Spalt in der Blende 33 am Ausgang des Gehäuses 39 auf der Meßzellenzeile sich abbildet. Der durch den für blaues Licht reflektierenden Spiegel 21 hindurchtretende Gelbanteil trifft auf einen weiteren teildurchlässigen Spiegel 22, der den Rotanteil auf eine vergleichbare Einrichtung mit Rotfilter 26 in Führungen 27 umlenkt, hinter dem eine Meßzellenzeile 28 für die Rotsignale liegt. Der auch durch den Spiegel 22 hindurchgetretene grüne Anteil trifft auf ein Grünfilter 29 in Führungen 30 mit einer dahinter liegenden Meßzellenzeile 31 für die Grünsignale. Die Transportgeschwindigkeit für den Film 1 in dem Lichtwertgeber 2 ist mit der Abtastgeschwindigkeit der Meßzellensignale so abgestimmt, daß gerade die erforderliche Signalmenge von den einzelnen Bereichen der Vorlage an den Meßwertumformer 5 gelangt.

Für die Festlegung der Durchlässigkeit der Filterbauteile — jeweils zusammgesetzt aus Wärmeschutzfilter 18 und 20, aus teildurchlässigem Spiegel 21, 22 und Farbfilter 23, 26, 29 in den einzelnen Farben — gelten folgende Überlegungen:

Die Farbdichte einer Stelle des Filmes, wie sie vom Kopiermaterial bei einer bestimmten Wellenlänge X registriert wird, ist gegeben durch

$$d_i^P = -\lg \frac{\int T(X)\, E_{Pap}^i(X)\, P_P(X)\, T_P(X)\, dX}{\int E_{Pap}^i(X)\, P_P(X)\, T_P(X)\, dX}$$

wobei

$T(X)$ die Transmission des Films

$E_{Pap}^i(X)$ die Papierempfindlichkeit in der Farbe i in Abhängigkeit von der Wellenlänge $\lambda (= X)$

$P_P(X)$ das Spektrum der Kopierlampe und

$T_P(X)$ die Transmission sämtlicher optischer Komponenten zwischen Kopierlampe und Papier bedeuten.

Die Farbdichte einer Stelle des Filmes, die ein Meßsystem bei einer Wellenlänge X registriert, ergibt sich aus

$$d_i^M = -\lg \frac{\int T(X)\, T_i(X)\, E_{Si}(X)\, P_M(X)\, dX}{\int T_i(X)\, E_{Si}(X)\, P_M(X)\, dX}$$

wobei

$T(X)$ die Transmission des Films

$T_i(X)$ die Transmission der Filterung der Meßzellen in der Farbe i

$E_{Si}(X)$ die spektrale Meßzellenempfindlichkeit und

$P_M(X)$ das Lampenspektrum im Meßlampenhaus bedeuten.

Ein Meßsystem, das eine hinreichend genaue Messung der Kopiervorlage im Hinblick auf das verwendete Kopiermaterial ermöglicht, muß die Kopiervorlage in gleicher Weise wie das Kopiermaterial registrieren, d. h.,

$$d_i^M = d_i^P.$$

Diese Bedingung ist erfüllt, wenn

$$T_i(X) = \frac{E_{Pap}^i(X) \cdot P_P(X) \cdot T_P(X)}{E_{Si}(X) \cdot P_M(X)} \cdot const$$

4

Dies bedeutet, daß das Meßsystem dann das gewünschte Verhalten zeigt, wenn die jeweiligen Filterelemente für jeden einzelnen Wellenlängenabschnitt nach der oben genannten Formel errechnet sind.

Untersuchungen haben gezeigt, daß die Anforderungen an die Kurvenanpassung hierbei relativ hoch sind. Zwischen den tatsächlich realisierten Filterkurven und der theoretisch errechneten Filterkurve sind nur Differenzen von wenigen Nanometern zulässig. Dabei sind auf der langwelligen Kante noch kleinere Unterschiede zulässig von etwa ± 2,5 nm, während auf der kurzwelligen Kante etwas größere Unterschiede bis zu ± 5 nm noch erträglich sind.

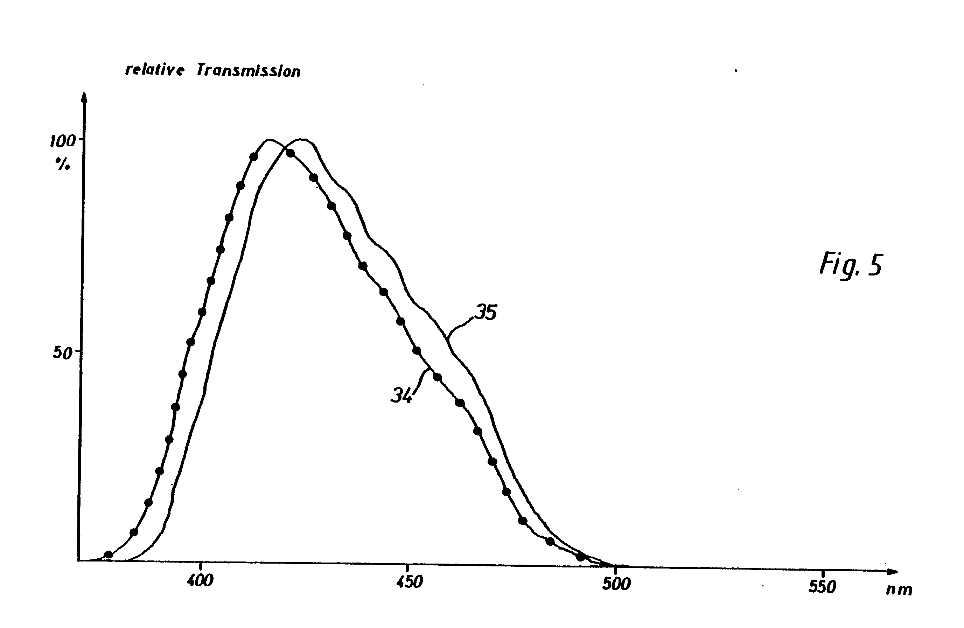

Aufgrund der Tatsache, daß die Empfindlichkeit der Meßzellen von der Wellenlänge abhängig ist und auch sonst in den Bauteilen des Meß- und Kopierstrahlengangs Unterschiede in der spektralen Durchlässigkeit auftreten, ergibt sich ein Unterschied zwischen der theoretischen Durchlässigkeit der Filter und der effektiven Empfindlichkeit des Kopiermaterials. In den Fig. 5 bis 7 sind jeweils für die verschiedenen Farben diese theoretisch errechneten Filterkurven der gemessenen Empfindlichkeit des Kopiermaterials gegenübergestellt, und zwar für ein bestimmtes Papier mit der Kenn-Nummer 589 der Anmelderin.

In Fig. 5 ist mit der Kurve 34 der spektrale Verlauf der Blauempfindlichkeit des Kopiermaterials 589 dargestellt. Ausgehend von dieser Empfindlichkeitskurve wurde die erforderliche Transmission $T_i$ von (X) errechnet und als Kurve 35 in Fig. 5 dargestellt. Die Abweichungen der beiden Kurven voneinander gehen zurück auf die Abweichungen der spektralen Empfindlichkeit der Meßzellen von einem konstanten Wert in dem blauen Bereich. Weitere Einflüsse können von Unterschieden zwischen Meß- und Kopierlampe herrühren.

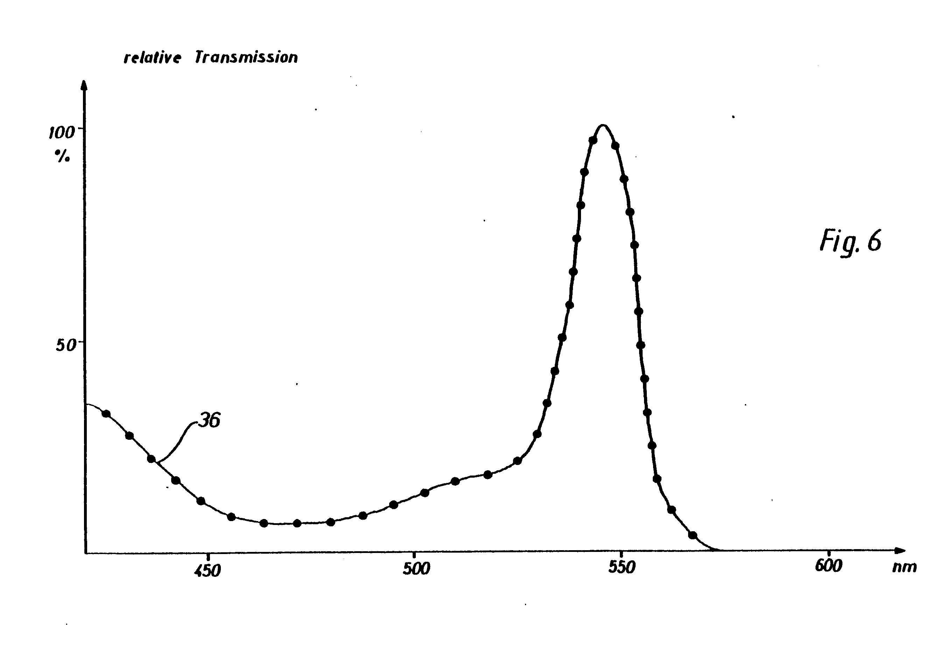

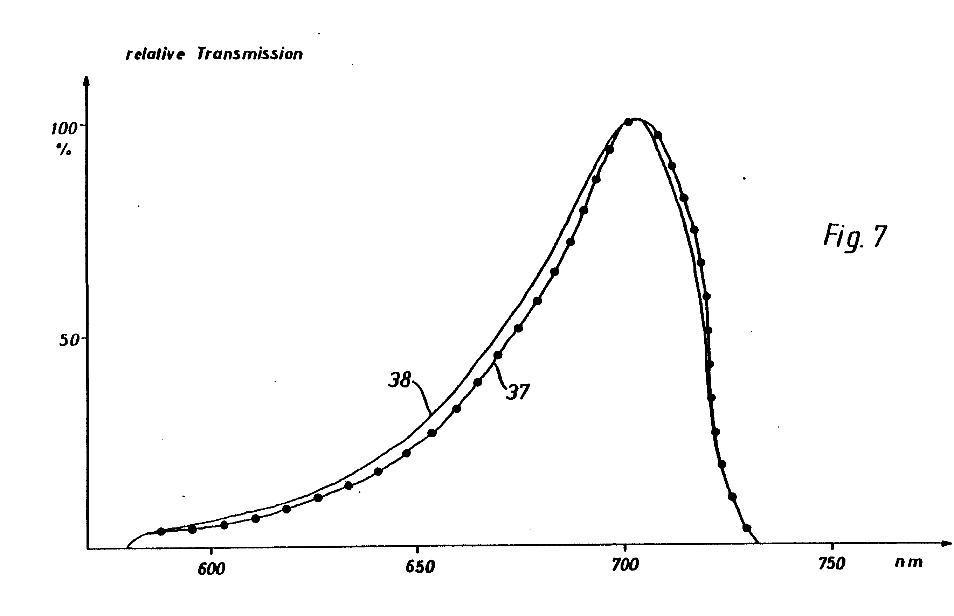

In Fig. 6 ist mit 36 die Kurve der relativen Grünempfindlichkeit des Typs 589 aufgezeichnet, mit der sich im interessierenden Bereich die Kurve der theoretischen Filterdurchlässigkeit nahezu deckt. In Fig. 7 mit der Darstellung der Kurven für den roten Bereich ist die Kurve dür die Papierempfindlichkeit mit dem Bezugszeichen 37 versehen, während die theoretische Filterkurve mit 38 bezeichnet ist.

Das Realisieren der theoretischen Filterdurchlässigkeit geschieht durch Kombination dichroitischer, d. h. durch Aufdampfen einer für bestimmte Farben reflektierenden Schicht teildurchlässig gemachter Spiegel mit Massefiltern und steilkantigen Farbfiltern, die ebenfalls durch Bedampfen hergestellt sind. Diese Filter sind großenteils im Handel erhältlich oder werden durch Aufdampfen von dünnen Schichten auf Tragkörper aus Glas hergestellt, wobei die Dicke der Schichten in der Größenordnung der Lichtwellenlänge liegt.

Die Genauigkeit, mit der die Annäherung der tatsächlichen Filterkurven an die theoretisch errechneten Kurven erfolgt, hängt von den Anforderungen ab. Es hat sich gezeigt, daß die Annäherung an die langwellige Kante, soweit sie die steilere Kante ist, d. h. in den Diagrammen rechts, mit größerer Genauigkeit erfolgen muß, z. B. mit einer Toleranz von ± 2,5 nm, während an der kurzwelligen Kante noch Abweichungen bis zu ± 5 nm zugelassen werden können.

Da die Spektralkurven der verschiedenen Kopiermaterialien oft sehr stark voneinander abweichen, ist es notwendig, für jedes zur Verarbeitung anstehende Kopiermaterial einen Filtersatz zu erstellen und beim Wechsel der Papiermarke auch die Filter zu wechseln. Deshalb sind die Aufnahmen für die Farbfilter 23, 26 und 29 so ausgebildet, daß der Wechsel durch Einschieben in die U-förmigen Führungen ohne größeren Aufwand möglich ist.

Die Wirkungsweise der beschriebenen Vorrichtung ist wie folgt:

Ein Filmstreifen wird durch den Lichtwertgeber und die anschließende Kopierstation 11 geführt, wobei die zwischen diesen beiden Stationen liegende Filmlänge, z. B. über eine Schleifenführung, so vergrößert ist, daß alle Vorlagen eines Films oder zumindest ein für die Art des Filmes repräsentativer Teil von diesem abgetastet sein kann, bevor die erste Vorlage in die Kopierstation 11 einläuft. Spätestens mit dem Durchlauf einer Klebestelle 1d mit den bogenförmigen Ausstanzungen 1e unter dem Lichtwertgeber 2 hindurch werden die Kennwerte für den vorhergehenden Film in dem Speicher 7 in einen Bereich zur Kopiersteuerung übernommen, so daß der größte Teil des Speichers für die Aufnahme der Meßwerte des nunmehr abzutastenden Films zur Verfügung steht. Die nunmehr beginnende bereichsweise Abtastung der Dichtewerte des Films in den einzelnen Farben mit den Farbfiltern mit Durchlässigkeitskurven gemäß Fig. 5 bis 7 führt zu Meßwerten, die in jeder Farbe genau dem Schwärzungsvermögen des auf das Kopiermaterial auftreffenden Lichtes in dem betreffenden Kopiermaterial entsprechen. Die Meßwerte einer für den gesamten Film repräsentativen Filmstreifenlänge gelangen über das Interface 6 in den Speicher 7, aus denen der Rechner 8 nach Erreichen einer angemessenen Meßwertmenge mit dem Ermitteln des für diesen Filmabschnitt zutreffenden Datensatz beginnt. Ein solcher Datensatz kann z. B. nach der Lehre der DE-A-29 12 130 ein Satz von Farbdichtedifferenzkurven sein, insbesondere eine rot/grün-Dichtedifferenz, aufgetragen über der Graudichte des betreffenden Feldes und eine blau/grün-Dichtedifferenzkurve, ebenfalls aufgetragen über der Graudichte des betreffenden Vorlagenbereiches. Aus der Abweichung des jeweiligen Meßpunktes von diesen Dichtedifferenzkurven wird dann entschieden, ob es sich bei diesem Punkt um einen normal gefärbten oder einen dominanten Punkt handelt. Die Meßwerte von Punkten jeweils einer Vorlage, die nicht dominant, d. h. etwa neutralfarbig sind, werden aufsummiert und danach die Lichtmengen in den drei Farben berechnet, die für diese Farbpunkte eine ebenfalls farbneutrale Kopie mittlerer Dichte ergeben. Diese Vorgabe für die Kopierlichtmengen in den einzelnen Farben wird dann gespeichert und im gleichen Rhythmus wie der Filmtransport erfolgt, z. B.

5

gesteuert durch den Weglängengeber 3, bereitgehalten, bis die entsprechende Kopiervorlage in der Kopierstation 11 angelangt ist. Durch die Steuerung der Einzelbelichtungszeiten über die Magnete 10d, e oder f werden dann die Kopierlichtmengen in den einzelnen Farben bestimmt.

Mit dem Eintreffen der Klebestelle an der Kopierstation können dann im Speicher 7 der kennzeichnende Datensatz des abgearbeiteten Films sowie die zugehörigen Meßwerte und Kopierlichtmengenwerte für die einzelnen Vorlagen gelöscht werden. Auf diese Weise ist im Speicher 7 immer genügend Platz für die Aufnahme neuer Meßwerte vorhanden.

Die Unterscheidung der Farbdominanten von Farbstichen kann auch nach der Lehre der gleichzeitig eingereichten Patentanmeldung EP 84 105 132.9 (EP-A-128 349) der selben Anmelderin erfolgen, wobei zur Sammlung des Datensatzes zunächst vom dünnsten Punkt in dem abgetasteten Filmbereich ausgegangen ist, der als nahe der Maske angenommen wird. Ausgehend von diesem Punkt wird dann jeder Vorlagenbereich untersucht, ob er einer Dominante zugehört oder nicht und aus den nicht dominanten Bereichen werden wiederum die Kopierlichtmengen in den einzelnen Farben berechnet.

**Patentansprüche**

1. Vorrichtung zum Bestimmen der Kopierlichtmengen in den verschiedenen Farben beim Farbkopieren auf Kopiermaterial mit Meßeinrichtungen für die Durchlässigkeit der Kopiervorlagen, wobei die spektrale Empfindlichkeit der Meßeinrichtung in jeder Farbe genau der des Kopiermaterials entspricht, dadurch gekennzeichnet, daß ein Rechner für das Auswerten der Meßwerte von Bereichen einer größeren Anzahl von Vorlagen (1a) des selben Films (1) oder von ausgewählten, für diesen Film kennzeichnenden Bereichen vorgesehen ist, der einen für diesen Filmabschnitt kennzeichnenden Datensatz liefert und welcher Rechner die Kopierlichtmengen aufgrund des Datensatzes und der Meßwerte der zu kopierenden Vorlage so bemißt, daß aufgrund des Datensatzes als farblich neutral anzusehende Vorlagenbereiche annähernd neutral grau kopiert werden, daß zur Angleichung der spektralen Empfindlichkeit der Meßeinrichtungen an die spektrale Empfindlichkeit des Kopiermaterials die Meßfilter zusätzlich den Farbgang in der Empfindlichkeit der Meßzellen ausgleichen und daß für die Meßfilter (23, 26, 29) vor den Meßzellen Führungen (24, 27, 30) vorgesehen sind und die Farbfilter (25, 27, 30) zur Anpassung an das jeweilige Kopiermaterial leicht austauschbar sind.

2. Vorrichtung nach Anspruch 1, dadurch gekennzeichnet, daß Meß- und Kopierstrahlengang getrennt sind und die Unterschiede in den Spektren der Kopierlampe und der Meßlampe und spektrale Unterschiede in der Durchlässigkeit des Kopierstrahlenganges bei der Bestimmung der Durchlässigkeit der Meßfilter berücksichtigt sind.

3. Vorrichtung nach Anspruch 2, dadurch gekennzeichnet, daß die Durchlässigkeit der Meßfilter vor den Meßzellen nach der Formel

$$T_i(X) = \frac{E^i_{Pap}(X) \cdot P_p(X) \cdot T_p(X)}{E_{Si}(X) \cdot P_M(X)} \cdot const$$

für jeden Wellenlängenbereich X bestimmt ist, wobei

$T_i(X)$  die Transmission der Filter vor den Meßzellen in der Farbe i,

$E^i_{Pap}(X)$  die Empfindlichkeit der Papiers,

$P_P(X)$  das Spektrum der Kopierlampe,

$T_P(X)$  die Transmission der optischen Komponenten des Kopierstrahlengangs,

$E_{Si}(X)$  die Empfindlichkeit der Meßzellen und

$P_M(X)$  das Spektrum der Lampe im Meßstrahlengang darstellt,

und daß die Filter durch Kombination von Massefiltern und Interferenzfiltern und -spiegeln gebildet sind.

4. Vorrichtung nach einem der vorangehenden Ansprüche, dadurch gekennzeichnet, daß die Meßfilter in ihrer Durchlässigkeit von der errechneten Durchlässigkeitskurve höchstens um ± 2,5 nm an der langwelligen Kante und um höchstens ± 5,0 nm an der kurzwelligen Kante abweichen.

**Claims**

1. Apparatus for determining the copying light quantities in the various colours in colour copying on to copying material, with devices for measuring the transparency of the originals to be copied, the spectral sensitivity of the measuring device in each colour corresponding exactly to that of the copying material, characterised in that a computer is provided for evaluating the measured values of areas of a relatively large number of originals (1a) in the same film (1) or of selected areas which are characteristic of this film, which computer provides a set of data characteristic of this film section and determines the copying light quantities on the basis of the set of data and the measured values of the original to be copied in such a manner that areas of the original which are to be considered neutral in colour according to the set of data are copied in an approximately neutral grey manner, that, in order to adapt the spectral sensitivity of the measuring devices to the spectral sensitivity of the copying material, the measuring filters additionally adjust the colour path in the sensitivity of the measuring cells and that guides (24, 27, 30) are provided for the measuring filters (23, 26, 29) upstream of the measuring cells and the colour filters (25, 27, 30) can easily be exchanged to match the respective copying material.

2. Apparatus according to Claim 1, characterised in that the path of the measuring beam is separate from that of the copying beam and the differences in the spectra of the copying lamp and the measuring lamp and spectral differences in the transmissivity of the copying beam path are taken into account in the determination of the transmissivity of the measuring filters.

3. Apparatus according to Claim 2, characterised in that the transmissivity of the measuring filters upstream of the measuring cells is determined according to the formula

$$T_i(X) = \frac{E^i_{Pap}(X) \cdot P_p(X) \cdot T_p(X)}{E_{Si}(X) \cdot P_M(X)} \cdot const$$

for each wavelength range X, wherein

$T_i(X)$ represents the transmission of the filters upstream of the measuring cells in the colour i,
$E^i_{Pap}(X)$ represents the sensitivity of the paper,
$P_P(X)$ represents the spectrum of the copying lamp,
$T_P(X)$ represents the transmission of the optical components of the path of the copying beam,
$E_{Si}(X)$ represents the sensitivity of the measuring cells and
$P_M(X)$ represents the spectrum of the lamp in the path of the measuring beam,
and in that the filters are formed by combining mass filters and interference filters and mirrors.

4. Apparatus according to one of the preceding claims, characterised in that the transmissivity of the measuring filters differs from the calculated transmissivity curve by at most ± 2.5 nm on the longwave side and by at most ± 5.0 nm on the shortwave side.

**Revendications**

1. Appareil pour la détermination des quantités de lumière de reproduction dans les différentes couleurs lors de la reproduction en couleurs sur du matériau pour le tirage d'épreuves, comprenant des dispositifs pour mesurer la transparence des originaux à reproduire, appareil dans lequel la sensibilité spectrale du dispositif de mesure dans chaque couleur correspond exactement à celle du matériau de tirage, caractérisé en ce qu'il est prévu un calculateur pour l'exploitation des valeurs de mesure de zones d'un nombre relativement élevé d'originaux (1a) du même film (1), ou de zones sélectes caractéristiques pour ce film, calculateur qui fournit un ensemble de données caractéristique pour ce morceau de film et qui dose les quantités de lumière de reproduction, sur la base de l'ensemble de données et des valeurs de mesure de l'original à copier, de manière que des zones d'original à considérer comme chromatiquement neutres, d'après l'ensemble de données, soient reproduites approximativement en gris neutre, que les filtres de mesure, pour rendre la sensibilité spectrale des dispositifs de mesure égale à la sensibilité spectrale du matériau de tirage, compensent en outre la variation selon la couleur dans la sensibilité des cellules de mesure, que des guides (24, 27, 30) sont prévus pour les filtres de mesure (23, 26, 29) devant les cellules de mesure et que les filtres de couleurs (25, 27, 30) sont facilement interchangeables pour l'adaptation au matériau de tirage employé.

2. Appareil selon la revendication 1, caractérisé en ce que le faisceau de mesure et le faisceau de reproduction sont séparés et qu'il est tenu compte des différences dans les spectres de la lampe de reproduction et de la lampe de mesure, de même que de différences spectrales dans la transparence du faisceau de reproduction, pour la détermination de la transparence des filtres de mesure.

3. Appareil selon la revendication 2, caractérisé en ce que la transparence des filtres de mesure devant les cellules de mesure est déterminée, pour chaque domaine de longueurs d'onde x, selon la formule :

$$T_i(X) = \frac{E^i_{Pap}(X) \cdot P_p(X) \cdot T_p(X)}{E_{Si}(X) \cdot P_M(X)} \cdot const$$

où

$T_i(X)$ représente la transmission des filtres devant les cellules de mesure dans la couleur i,

7

$E^i_{Pap}(X)$ la sensibilité du papier,

$P_P(X)$ le spectre de la lampe de reproduction,

$T_P(X)$ la transmission des composants optiques du faisceau de reproduction,

$E_{Si}(X)$ la sensibilité des cellules de mesure, et

$P_M(X)$ le spectre de la lampe dans le faisceau de mesure,

et que les filtres sont formés par une combinaison de filtres de masse, de filtres d'interférence et de miroirs d'interférence.

4. Appareil selon une des revendications précédentes, caractérisé en ce que la transparence des filtres de mesure s'écarte tout au plus de ± 2,5 nm du côté des grandes longueurs d'onde et de tout au plus ± 5,0 nm du côté des petites longueurs d'onde de la courbe de transparence calculée.

Fig. 1

0 128 348

Fig. 2

Fig. 3

2

Fig. 4

relative Transmission

Fig. 5

0 128 348

Fig. 6

relative Transmission

100
%

50

38

37

Fig. 7

600    650    700    750    nm

0 128 348